# EUROPEAN PATENT APPLICATION

(11) **EP 4 152 828 A1**
(43) Date of publication of application: **22.03.2023**
(21) Application number: 21822654.6
(22) Date of filing: 07.06.2021
(51) Int. Cl.: H04W 40/22, H04W 76/14, H04W 4/40, H04W 40/12

(54) **METHOD FOR ESTABLISHING A RELAY BEARER AND COMMUNICATION APPARATUS**

(30) Priority: 09.06.2020 CN 202010517697
(71) Applicant: Huawei Technologies Co., Ltd., Longgang District, Shenzhen, Guangdong 518129 (CN)
(72) Inventor: FAN, Qiang, Shenzhen, Guangdong 518129 (CN); LI, Xiangyu, Shenzhen, Guangdong 518129 (CN); WANG, Jun, Shenzhen, Guangdong 518129 (CN); PENG, Wenjie, Shenzhen, Guangdong 518129 (CN)
(74) Representative: Pfenning, Meinig & Partner mbB
(86) International application number: PCT/CN2021/098560
(87) International publication number: WO 2021/249327

(57) **Abstract**

Embodiments of this application disclose a relay bearer establishing method and a communication apparatus, are applicable to fields such as V2X, vehicle-to-everything, intelligent connected vehicles, and assisted driving, and are for establishing a relay bearer, so that a relay device can transfer data between a first terminal and a second terminal over the relay bearer. The method in embodiments of this application includes: receiving a first parameter set that is for establishing a relay radio link control RLC bearer and that is sent by a first terminal; and further receiving a first configuration message sent by a network device, where the first configuration message includes a second parameter set corresponding to the relay RLC bearer. The relay device establishes, based on the first parameter set received from the first terminal and the second parameter set obtained from the network device, a relay RLC bearer corresponding to a first link, where the first link is a link between the relay device and a second terminal, so that the first terminal and the second terminal can transfer data via the relay device. This application further provides the communication apparatus, configured to establish the relay bearer.

## Description

This application claims priority to Chinese Patent Application No. 202010517697.5, filed with the China National Intellectual Property Administration on June 9, 2020 and entitled "RELAY BEARER ESTABLISHING METHOD AND COMMUNICATION APPARATUS", which is incorporated herein by reference in its entirety.

### TECHNICAL FIELD

This application relates to the communications field, and in particular, to a relay bearer establishing method and a communication apparatus.

### BACKGROUND

Vehicle-to-everything (vehicle to everything, V2X) is an important component of a future intelligent traffic management system. Vehicle-to-everything communication means providing vehicle information for a vehicle user by using devices such as a sensor loaded on a vehicle and a vehicle-mounted terminal and implementing vehicle to vehicle, vehicle to pedestrian, vehicle to infrastructure, and vehicle to network by using various communication technologies.

V2X includes two communication modes: a communication mode through a PC5 interface and a communication mode through a Uu interface. The Uu interface is a communication interface between a network device and a terminal, and the PC5 interface is a direct communication interface between V2X terminals. A direct communication (where communication is performed through the PC5 interface) link between the V2X terminals is also defined as a sidelink (sidelink, SL). When the terminals communicate with each other through the sidelink, a vehicle node in vehicle-to-everything has characteristics such as a rapid movement and a fast network topology change. The characteristics may cause a communication link to be unstable or even interrupted. Consequently, the communication between the terminals through the sidelink is limited. To resolve the problem, the 3rd generation partnership project (3rd generation partnership project, 3GPP) international organization for standardization currently discusses introducing of a relay device (relay) between the terminals. To be specific, data between two terminals may be forwarded via the relay device.

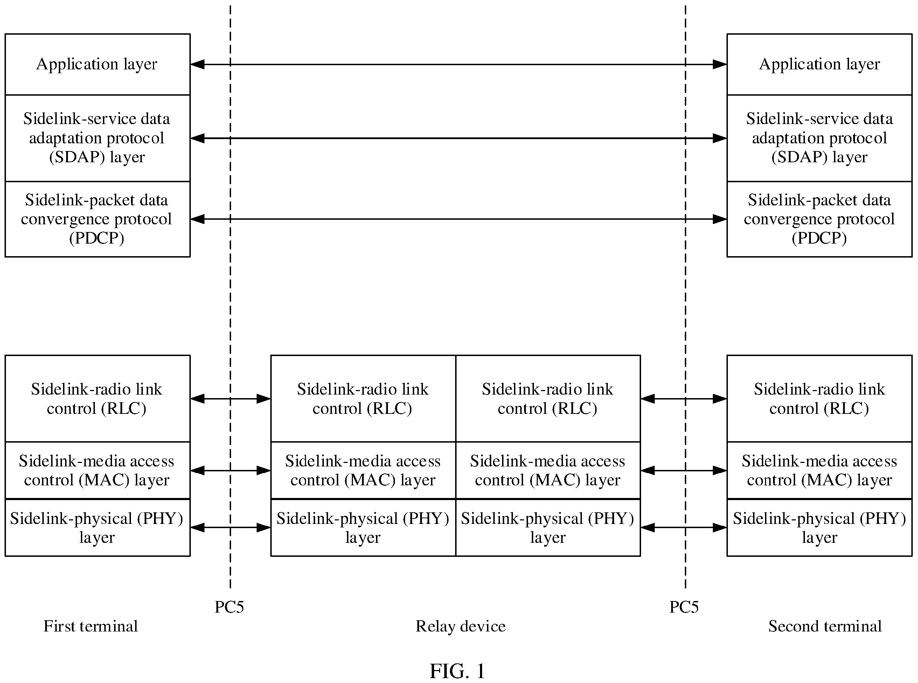

When the two terminals communicate with each other via the relay device, there is a transmitting side terminal, a receiving side terminal, and the relay device. The transmitting side terminal and the receiving side terminal may transfer the data and signaling via the relay device. A relay implementation discussed in the current standard includes a relay mode that is based on a data link layer (Layer 2). In the relay mode that is based on L2, refer to a user plane protocol stack shown in FIG. 1. User plane data is relayed and forwarded below a packet data convergence protocol (packet data convergence protocol, PDCP) layer. The relay mode is still in a discussion stage. How to establish a relay bearer to forward the data between the two terminals over the relay bearer becomes an urgent problem to be resolved.

### SUMMARY

Embodiments of this application provide a relay bearer establishing method and a communication apparatus. The method is applied to a communication system, and the communication system includes a network device, a first terminal, a second terminal, and a relay device. The relay device is located within coverage of the network device, and the relay device is in communication connection with the base station. The first terminal may be a transmitting end device, the second terminal may be a receiving end device, a link between the relay device and the second terminal is a first link, and a link between the first terminal and the relay device is a second link. In a relay mode that is based on a data link layer, user plane data is relayed and forwarded below a PDCP layer. The relay device needs to establish a relay RLC bearer corresponding to the first link and a relay RLC bearer corresponding to the second link. The relay device may obtain, from the first terminal, some parameters needed for establishing the relay RLC bearer, and obtain, from the network device, some other parameters needed for establishing the relay RLC bearer. The relay device establishes the relay RLC bearer based on the some parameters obtained from the first terminal and the some other parameters obtained from the network device, so that the first terminal and the second terminal can transfer data via the relay device.

According to a first aspect, an embodiment of this application provides a relay bearer establishing method. The method may include: A relay device receives an indication message sent by a first terminal, where the indication message includes configuration information for establishing a relay radio link control RLC bearer, the configuration information of the relay RLC bearer includes a first parameter set, and the first parameter set is a set of parameters that a receiving side and a transmitting side need to understand consistently. For example, if the first parameter set corresponds to a first link and a second link, the first parameter set is a parameter that the first terminal, the relay device, and a second terminal need to understand consistently. In addition, the relay device may receive a first configuration message sent by a network device, where the first configuration message includes a second parameter set corresponding to the relay RLC bearer, and the second parameter set is a transmit only parameter set. The relay device establishes, based on the first parameter set and the second parameter set, a relay RLC bearer corresponding to the first link, so that the first terminal and the second terminal can transfer data via the relay device. In this embodiment, the relay device establishes the relay RLC bearer based on some parameters obtained from the first terminal and some parameters obtained from the network device, and a configuration parameter that is of the relay RLC bearer and that the relay device and the second terminal need to understood consistently (or that is applicable to both the relay device and the second terminal) is determined by the first terminal together. Configuration parameters corresponding to the first link and the second link are well adapted to better ensure forwarding of service data.

In an optional implementation, the indication message further includes a first QoS information set corresponding to the relay RLC bearer. The relay device may further send a first request message to the network device, to request the second parameter set, where the first request message may include an identifier of the second terminal, an identifier of the relay RLC bearer, and a target QoS information set, the identifier of the second terminal notifies the network device that the requested second parameter set is a parameter set corresponding to the second link, and there is an association relationship between the target QoS information set and the first QoS information set. In this embodiment of this application, the relay device reports target QoS information to the network device, where the target QoS information may reflect QoS parameters, for example, a delay, reliability, a throughput rate, and a packet loss rate, of service data transmitted over the relay RLC bearer. In this way, the relay device can obtain, from the network device, the second parameter set configured for the relay RLC bearer based on the target QoS information.

In an optional implementation, the first parameter set includes a first configuration parameter set corresponding to the first link and a second configuration parameter set corresponding to the second link. The first configuration parameter set is a parameter that the relay device and the second terminal need to understand consistently, and the second configuration parameter set is a parameter that the first terminal and the relay device need to understand consistently. A configuration parameter included in the first configuration parameter set is the same as a configuration parameter included in the second configuration parameter set, and parameter values corresponding to all configuration parameters may be the same, or may be different. Further, the relay device may establish, based on the first configuration parameter set and the second parameter set, a relay RLC bearer corresponding to the first link, and establish, based on the second configuration parameter set, a relay RLC bearer corresponding to the second link. The relay RLC bearer corresponding to the second link is a unidirectional RLC bearer. To be specific, the first terminal may send data to the relay device over the relay RLC bearer corresponding to the second link, and the relay device transfers the data to the second terminal over the relay RLC bearer corresponding to the first link.

In an optional implementation, the first parameter set may be one set. The first parameter set corresponds to the first link and the second link. To be specific, the first parameter set is an RLC configuration parameter that the first terminal, the relay device, and the second terminal all understand consistently. For example, a parameter in the first parameter set is an RLC SN length. The RLC SN length is 12 bits, indicating that an RLC SN length corresponding to the first link is 12 bits, and indicating that an RLC SN length corresponding to the first link is 12 bits. In this embodiment of this application, configuration parameters of the relay RLC bearers corresponding to both the links may be indicated by using the configuration parameter in the set.

In an optional implementation, the first configuration parameter set and the second configuration parameter set are a same parameter configuration set. The configuration parameter included in the first configuration parameter set and a parameter value are the same as the configuration parameter included in the second configuration parameter set and a parameter value. For example, an RLC SN length in the first configuration parameter set is 12 bits, and an RLC SN length in the second configuration parameter set is 12 bits. In this embodiment of this application, a configuration parameter of the RLC bearer corresponding to the first link and a configuration parameter of the RLC bearer corresponding to the second link may be respectively indicated by using the two configuration parameter sets.

In an optional implementation, the relay device receives a configuration message that is for establishing a DRB and that is sent by the first terminal, and forwards, to the second terminal, the configuration message for establishing the data radio bearer DRB, where an relay bearer for forwarding the configuration message may be preconfigured, the configuration message for establishing the DRB includes an identifier of the DRB, configuration information of a service data adaptation protocol SDAP layer, configuration information of a packet data convergence protocol PDCP layer, and configuration information of an RLC layer, and the relay RLC bearer includes a correspondence between a relay RLC entity and the DRB. In this embodiment of this application, the first terminal determines the configuration message for establishing the DRB, and notifies the second terminal of the configuration message, so that the second terminal establishes the DRB based on the configuration message. In this way, the relay device can forward data to the second terminal through the first link, and the second terminal receives the data over a DRB of the first link.

In an optional implementation, a relay RLC bearer corresponding to the second link is a bi-directional RLC bearer. The relay device receives a second configuration message sent by the network device, where the second configuration message includes a second transmit only parameter set corresponding to the relay RLC bearer corresponding to the second link and an identifier of the relay RLC bearer. The relay device may associate the second transmit only parameter set with the relay RLC bearer based on the identifier of the relay RLC bearer. The relay device establishes, based on the first parameter set and the second transmit only parameter set, the relay RLC bearer corresponding to the second link, where the relay RLC bearer is the bi-directional bearer, so that the relay device can send data to the first terminal through the second link.

In an optional implementation, the relay device may further send a second request message to the network device, where the second request message requests the second transmit only parameter set, the second request message may include an identifier of the first terminal, the identifier of the relay RLC bearer, and a target QoS information set, and the identifier of the first terminal notifies the network device that a requested transmit only parameter is the second transmit only parameter set in a direction from the relay device to the first terminal. In addition, the relay device reports the target QoS information set to the network device, and the network device may feed back, to the relay device based on the target QoS information set, the second transmit only parameter set corresponding to the second link. The relay device may establish, based on the first parameter set and the second transmit only parameter set, a bi-directional RLC bearer corresponding to the first link, so that the relay device can feed back data to the first terminal over the bi-directional RLC bearer corresponding to the second link.

In an optional implementation, the first QoS information set is one set, and the set indicates a QoS information set that corresponds when the first terminal transmits data to the second terminal. A delay is used as an example. A delay in the first QoS information set is 10 ms, indicating that a delay requirement on data transmission from the first terminal to the second terminal is 10 ms. The target QoS information set may be the first QoS information set. It may be understood that the relay device directly reports the first QoS information set received from the first terminal as the target QoS information set to the network device. Alternatively, the target QoS information set is an information set determined by the relay device based on the first QoS information set. For example, the relay device may determine, because the delay requirement on the data transmission from the first terminal to the second terminal is 10 ms, that a delay requirement on data transmission from the relay device to the second terminal is 5 ms. The relay device reports the target QoS information set to the network device, and the relay device may obtain, from the network device, the second parameter set for establishing the relay RLC bearer.

In an optional implementation, the first QoS information set includes two sets. To be specific, the two sets are a first information set and a second information set. The first information set is a QoS information set that corresponds when the relay device transmits data through the first link. A delay is used as an example. A delay requirement for the relay device to transmit the data to the second terminal through the first link is 5 ms. The second information set is a QoS information set that corresponds when the first terminal transmits data through the second link. For example, a delay requirement that corresponds when the first terminal transmits the data to the relay device through the second link is 5 ms. The target QoS information set may be an information set determined by the relay device based on the second information set. For example, the relay device may determine, based on the delay requirement that corresponds when the first terminal transmits the data to the relay device through the second link, the delay requirement for the relay device to transmit the data to the second terminal through the first link. Alternatively, the target QoS information set is the first information set in the first QoS information set. To be specific, the relay device directly reports the first information set as the target QoS information set to the network device, the relay device obtains, from the network device, the second parameter set for establishing the relay RLC bearer, and the relay device establishes a relay RLC bearer corresponding to the second link.

According to a second aspect, an embodiment of this application provides a relay bearer establishing method, including: A relay device receives a first configuration message sent by a network device, where the first configuration message includes a target parameter set of a relay RLC bearer corresponding to a first link. Then, the relay device establishes, based on the target parameter set, the relay RLC bearer corresponding to the first link, where the first link is for data transmission between a first terminal and a second terminal. In this embodiment, the relay device receives the target parameter set that is configured by the network device for the relay device and that is for establishing the relay RLC bearer. Because transmission between the relay device and the second terminal needs resource allocation performed by the network device connected to the relay device, it is more appropriate for the network device to determine a configuration parameter corresponding to the first link, so that extra complexity that is of base station scheduling and that is caused by determining the configuration parameter of the relay RLC bearer by the first terminal can be avoided. The relay device may establish, based on the target parameter set, the relay RLC bearer corresponding to the first link, so that the relay device forwards data between the two terminals.

In a possible implementation, the target parameter set includes a first configuration parameter set and a first transmit only parameter set that correspond to the first link. The first configuration parameter set is a set of parameters that the relay device and the second terminal need to understood consistently. All parameters included in the first transmit only parameter set corresponding to the first link are parameters related only to a transmitting side, for example, T-PollRetransmit for controlling duration of a polling (polling) retransmission timer and a parameter pollPDU for controlling triggering of polling. The relay device may establish, based on the first configuration parameter set corresponding to the first link and the first transmit only parameter set corresponding to the first link, the relay RLC bearer corresponding to the first link, so that the relay device forwards the data between the two terminals.

In a possible implementation, the relay device receives an indication message sent by the first terminal, where the indication message includes configuration information for establishing the relay RLC bearer, the configuration information of the relay RLC bearer may include an identifier of the relay RLC bearer, an identifier of a data radio bearer DRB associated with the relay RLC bearer, and a second configuration parameter set, the relay RLC bearer includes a correspondence between a relay RLC entity and the DRB, and the second configuration parameter set is a configuration parameter corresponding to a second link. It may be understood that the second configuration parameter set is a set of parameters that the first terminal and the relay device need to understand consistently. The relay device may establish, based on the second configuration parameter set received from the first terminal, a relay RLC bearer corresponding to the second link. In this way, the relay device can receive, over the relay RLC bearer corresponding to the second link, data sent by the first terminal, and transfer the data to the second terminal over the relay RLC bearer corresponding to the first link.

In a possible implementation, the indication message includes a first quality of service QoS information set. Before the relay device receives the first configuration message sent by the network device, the relay device may further send a first request message to the network device, to request the target parameter set, where the first request message may include an identifier of the second terminal, the identifier of the relay RLC bearer, and a target QoS information set, the identifier of the second terminal notifies the network device that the requested target parameter set is a parameter set corresponding to the second link, there is an association relationship between the target QoS information set and the first QoS information set, and there is a correspondence between the target QoS information set and the target parameter set. In this embodiment, the relay device reports target QoS information to the network device, where the target QoS information may reflect QoS parameters, for example, a delay, reliability, a throughput rate, and a packet loss rate, of service data transmitted over the relay RLC bearer. In this way, the network device can configure the target parameter set for the relay RLC bearer based on the target QoS information.

In a possible implementation, the relay RLC bearer corresponding to the second link may be a bi-directional RLC bearer. The relay device receives a second configuration message sent by the network device, where the second configuration message includes a second transmit only parameter set corresponding to the bi-directional RLC bearer corresponding to the second link. The relay device establishes, based on the second transmit only parameter set and the second configuration parameter set, the relay RLC bearer corresponding to the second link, where the relay RLC bearer is the bi-directional RLC bearer, so that the relay device can receive, over the bi-directional RLC bearer, data sent by the first terminal, and can send data to the first terminal.

In a possible implementation, the relay device sends a second request message to the network device, to request the second transmit only parameter set corresponding to the bi-directional RLC corresponding to the second link, where the second request message may include an identifier of the first terminal, the identifier of the relay RLC bearer, and a target QoS information set, the identifier of the first terminal notifies the network device that a requested transmit only parameter is the second transmit only parameter set in a direction from the relay device to the first terminal. In addition, the relay device reports the target QoS information set to the network device, and the network device may feed back, to the relay device, the second transmit only parameter set corresponding to the second link, where there is a correspondence between the target QoS information set and the second transmit only parameter set. In this embodiment of this application, the second transmit only parameter set is configured by the network device. In addition, the relay device reports the target QoS information set, and the network device may configure, for the relay device based on the target QoS information set, the second transmit only parameter set corresponding to the second link. The relay device may establish, based on the second configuration parameter set and the second transmit only parameter set, a bi-directional RLC bearer corresponding to the first link, so that the relay device can feed back data to the first terminal over the bi-directional RLC bearer corresponding to the second link.

In a possible implementation, the relay device sends, to the second terminal, configuration information of an RLC bearer corresponding to the DRB, where the configuration information of the RLC bearer includes a first configuration parameter set, the identifier of the DRB, and an identifier of the RLC bearer. The relay device sends the first configuration parameter set obtained from the network device to the second terminal, so that the second terminal associates the first configuration parameter set with the RLC bearer based on the identifier of the DRB and the identifier of the RLC bearer. The first configuration parameter set is used by the second terminal to establish the DRB bearer, so that the second terminal can receive, based on the established DRB bearer, data transferred by the relay device.

In a possible implementation, the relay device receives configuration information that is for establishing the DRB and that is sent by the first terminal, and forwards the configuration information for establishing the DRB to the second terminal, where the configuration information for establishing the DRB includes the identifier of the DRB, configuration information of a service data adaptation protocol SDAP layer, and configuration information of a packet data convergence protocol PDCP layer, and the relay RLC bearer includes the correspondence between the relay RLC entity and the DRB. The relay device may forward the configuration information that is for establishing the DRB and that is sent by the first terminal to the second terminal, where a relay RLC bearer for forwarding the configuration information for establishing the DRB may be preconfigured. In this embodiment of this application, the first terminal determines the configuration information for establishing the DRB, and notifies the second terminal of the configuration information, so that the second terminal establishes the DRB based on the configuration information. In this way, the relay device forwards data to the second terminal through the first link, and the second terminal receives the data over the DRB.

In a possible implementation, the relay device may send a first configuration parameter set to the first terminal. Then, the first terminal sends the first configuration parameter set to the second terminal. The first terminal may forward the first configuration parameter set to the second terminal via the relay device. A relay RLC bearer for forwarding is preconfigured, to reduce a quantity of signaling messages between the relay device and the second terminal.

According to a third aspect, an embodiment of this application provides a relay bearer establishing method, including: A first terminal determines configuration information for establishing a relay RLC bearer, where the configuration information of the relay RLC bearer includes a first parameter set. The first terminal sends the configuration information of the relay RLC bearer to a relay device. In this embodiment, the relay device may establish the relay RLC bearer based on the configuration information that is of the relay RLC bearer and that is determined by the first terminal, so that the relay device transfers, over the relay RLC bearer, data sent by the first terminal to a second terminal.

In a possible implementation, the first parameter set may include two sets, and the two sets are a first configuration parameter set corresponding to a first link and a second configuration parameter set corresponding to a second link. The first configuration parameter set may be understood as a set of parameters that both the relay device and the second terminal understand consistently, and the second configuration parameter set may be understood as a set of parameters that both the first terminal and the relay device understand consistently. The first configuration parameter set is used by the relay device to establish a relay RLC bearer corresponding to the first link, and the second configuration parameter set is used by the relay device to establish a relay RLC bearer corresponding to the second link.

In a possible implementation, the first parameter set may be one set. The first parameter set corresponds to a first link and a second link. To be specific, the first parameter set is a set of RLC configuration parameters that the first terminal, the relay device, and the second terminal all need to understand consistently. For example, a parameter in the first parameter set is an RLC SN length. The RLC SN length is 12 bits, indicating that an RLC SN length corresponding to the first link is 12 bits, and indicating that an RLC SN length corresponding to the first link is 12 bits. In this embodiment of this application, configuration parameters of relay RLC bearers corresponding to both the links may be indicated by using the configuration parameter in the set.

In a possible implementation, the first configuration parameter set and the second configuration parameter set are a same configuration parameter set. The configuration parameter included in the first configuration parameter set and a parameter value are the same as the configuration parameter included in the second configuration parameter set and a parameter value. For example, an RLC SN length in the first configuration parameter set is 12 bits, and an RLC SN length in the second configuration parameter set is 12 bits. In this embodiment of this application, a configuration parameter of the RLC bearer corresponding to the first link and a configuration parameter of the RLC bearer corresponding to the second link may be respectively indicated by using the two configuration parameter sets. The first terminal may determine the configuration parameter of the relay RLC bearer corresponding to the first link and the configuration parameter of the relay RLC bearer corresponding to the second link together. The configuration parameters corresponding to the first link and the second link are well adapted to better ensure forwarding of service data.

In a possible implementation, the first parameter set corresponds to a second link. That is, the first parameter set is a parameter that both the first terminal and the relay device understand consistently. In this embodiment, the first terminal may alternatively determine only configuration information that is for establishing the relay RLC bearer and that corresponds to the second link, and the relay device may obtain, from the first terminal, the configuration information that is for establishing the relay RLC bearer and that corresponds to the second link, and establishes, based on the configuration information that is for establishing the relay RLC bearer and that corresponds to the second link, a relay RLC bearer corresponding to the second link.

In a possible implementation, the configuration information further includes a first QoS information set, the first QoS information set is one set, and the first QoS information set is a QoS information set that corresponds when the first terminal transmits data to the second terminal. In this embodiment of this application, the first terminal may determine, by using the set, a QoS information set applicable to both the first link and the second link.

In a possible implementation, the first QoS information set may alternatively include two sets, the two sets include a first information set and a second information set. The first information set is a QoS information set that corresponds when the relay device transmits data through the first link. A delay is used as an example. A delay requirement for the relay device to transmit the data to the second terminal through the first link is 5 ms. The second information set is a QoS information set that corresponds when the first terminal transmits data through the second link. For example, a delay requirement that corresponds when the first terminal transmits the data to the relay device through the second link is 5 ms. In this embodiment of this application, the first terminal may determine the two sets, to be specific, may separately determine the QoS information set corresponding to the first link and the QoS information set corresponding to the second link.

According to a fourth aspect, an embodiment of this application provides a communication apparatus. The communication apparatus has a function of implementing the method performed by the relay device in the first aspect or the second aspect, or the communication apparatus has a function of implementing the method performed by the first terminal in the third aspect. The function may be implemented by using hardware, or may be implemented by the hardware executing corresponding software. The hardware or the software includes one or more modules corresponding to the foregoing function.

According to a fifth aspect, an embodiment of this application provides a communication apparatus, including a processor. The processor is coupled to at least one memory. The processor is configured to read a computer program stored in the at least one memory, so that the apparatus performs the method according to the first aspect or the second aspect, or the apparatus performs the method according to the third aspect.

According to a sixth aspect, an embodiment of this application provides a computer-readable medium. The computer-readable storage medium is configured to store a computer program. When the computer program is run on a computer, the computer is enabled to perform the method according to the first aspect or the second aspect, or the apparatus is enabled to perform the method according to the third aspect.

According to a seventh aspect, an embodiment of this application provides a chip, including a processor and a communication interface. The processor is configured to read instructions to perform the method according to the first aspect or the second aspect or to enable the apparatus to perform the method according to the third aspect.

### BRIEF DESCRIPTION OF DRAWINGS

FIG. 1 is a schematic diagram of a user plane protocol stack of a first terminal, a relay device, and a second terminal according to an embodiment of this application;
FIG. 2 is a schematic diagram of a communication system according to an embodiment of this application;
FIG. 3 is a schematic flowchart of steps in an embodiment of relay bearer establishing according to embodiments of this application;
FIG. 4 is a schematic flowchart of steps in another embodiment of relay bearer establishing according to embodiments of this application;
FIG. 5 is a schematic flowchart of steps in another embodiment of relay bearer establishing according to embodiments of this application;
FIG. 6 is a schematic diagram of a structure of an embodiment of a communication apparatus according to embodiments of this application; and
FIG. 7 is a schematic diagram of a structure of another embodiment of a communication apparatus according to embodiments of this application.

### DESCRIPTION OF EMBODIMENTS

The following describes technical solutions in embodiments of this application with reference to the accompanying drawings in embodiments of this application.

The term "and/or" in this application may describe an association relationship between associated objects, and represents that there may be three relationships. For example, A and/or B may represent the following three cases: Only A exists, both A and B exist, and only B exists. In addition, the character "/" in this application generally indicates an "or" relationship between the associated objects.

In the specification, claims, and the accompanying drawings of this application, the terms "first", "second", and the like are intended to distinguish between similar objects but are not necessarily for describing a specific order or sequence. It should be understood that the data termed in such a way is interchangeable in appropriate circumstances, so that embodiments described herein can be implemented in orders other than the order illustrated or described herein. In addition, the terms "include", "have", and any variant thereof mean to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device.

For ease of understanding, terms in this application are first described.

Radio link control (radio link control, RLC) bearer (bearer): A network device (for example, a base station) may configure an RLC entity and a corresponding logical channel that are associated with a radio bearer (radio bearer, RB). The radio bearer may be a data radio bearer (data radio bearer, DRB) or a signaling radio bearer (signaling radio bearer, SRB). The RLC entity and the corresponding logical channel that are associated with the radio bearer are usually referred to as an RLC bearer. Configuration parameters of the RLC bearer include an RLC entity configuration, a logical channel identifier (logical channel identifier, LCID), a logical channel configuration, and an identifier of the associated radio bearer. For a sidelink interface, the network device may configure an RLC entity associated with the DRB and a logical channel, and the RLC entity and the logical channel that are associated with the sidelink radio bearer are referred to as a sidelink RLC bearer.

First link: a link between a relay device and a second terminal (a receiving side terminal).

Second link: a link between a first terminal (a transmitting side terminal) and the relay device.

(Tx&Rx common) Configuration parameter applicable to both a transmitting side and a receiving side: a parameter that the receiving side and the transmitting side need to understand consistently to ensure communication between the receiving side and the transmitting side. For example, Tx&Rx common RLC configuration parameters include an RLC mode (mode), an RLC sequence number (sequence number, SN) length, and the like. The transmitting side and the receiving side are relative concepts. For example, for the second link, the first terminal is the transmitting side, and the relay device is the receiving side. The parameter that the transmitting side and the receiving side need to understand consistently is a parameter that the first terminal and the relay device understand consistently. For the first link, the relay device is the transmitting side, and the second terminal is the receiving side. The Tx&Rx common configuration parameter is a parameter that the relay device and the second terminal need to understand consistently. For an entire link between the first terminal and the second terminal, the Tx&Rx common configuration parameter is a parameter that the first terminal, the relay device, and the second terminal all need to keep understanding consistently. If the first terminal forwards data to the second terminal via the relay device, the Tx&Rx common configuration parameter is a parameter that the first terminal and the second terminal need to understand consistently. For example, the Tx&Rx common configuration parameter is a Tx&Rx common packet data convergence protocol (packet data convergence protocol, PDCP)-related configuration parameter, and may specifically include a PDCP SN length, a robust header compression (robust header compression, RoHC) configuration, and the like. It should be noted that "Tx&Rx common" is also abbreviated as "common" in this specification.

Bi-directional RLC bearer: Data can be sent and received over the bi-directional RLC bearer. For example, for the second link, if an RLC bearer corresponding to the second link is a bi-directional RLC bearer, the first terminal may send data to the relay device, and may also receive data sent by the relay device (or the relay device may send data to the first terminal).

Unidirectional RLC bearer: A data flow direction is a direction from a transmitting end device to a receiving end device. For a transmitting end, data can only be sent over the unidirectional RLC bearer. For a receiving end, data can only be received over the unidirectional RLC bearer. If an RLC bearer corresponding to the second link is a unidirectional RLC bearer, the first terminal may send data to the relay device, but the relay device cannot send data to the first terminal over the unidirectional RLC bearer.

Transmit only (Tx only) parameter: a parameter related only to the transmitting side. For example, for the first link, when the relay device sends data to the second terminal, the relay device is the transmitting side, and the Tx only parameter corresponds to a parameter configured for the relay device. For example, a Tx only parameter of the RLC bearer includes but is not limited to T-PollRetransmit for controlling duration of a polling (polling) retransmission timer, a parameter pollPDU for controlling triggering of polling, pollByte, a maximum allowed quantity of times of automatic repeat request (automatic repeat-request, ARQ) retransmission in RLC AM mode, and the like.

Quality of service (quality of service, QoS) information: The QoS information may include at least one of a PC5 quality of service identifier (PC5 quality of service identifier, PQI), a PC5 QoS flow identifier (PC5 quality of service flow identifier, PFI), a logical channel priority, or other QoS parameters, for example, a delay, reliability, a throughput rate, and a packet loss rate, of service data transmitted over the RLC bearer.

Identifier of a relay RLC bearer: The identifier of the relay RLC bearer is for distinguishing RLC bearers. The identifier of the relay RLC bearer may be an index number of the relay RLC bearer. For example, index numbers may be 1, 3, 5, 7, and the like. Alternatively, the identifier may be an LCID corresponding to the relay RLC bearer. Alternatively, the identifier is an implicit representation of an index determined in order based on a quantity of relay RLC bearers. For example, if the first terminal indicates five relay RLC bearers in total, index numbers corresponding to the five relay RLC bearers are 0, 1, 2, 3, and 4.

Identifier of a terminal: The identifier of the terminal may be a destination layer-2 ID (destination layer-2 ID), and identifies a specific unicast receiving side terminal. Alternatively, the identifier may be an identifier, for example, a local ID, allocated by the relay device for relay communication between the first terminal and the second terminal.

Embodiments of this application provide a relay bearer establishing method and a communication apparatus. The method is applied to a communication system. The communication system includes but is not limited to a 4th generation (4th generation, 4G) communication system, a 5G communication system, a 6G communication system, a system integrating a plurality of communication systems, or a future evolved communication system, for example, a long term evolution (long term evolution, LTE) system, a new radio (new radio, NR) system, a communication system related to the 3rd generation partnership project (3rd generation partnership project, 3GPP), and another such communication system.

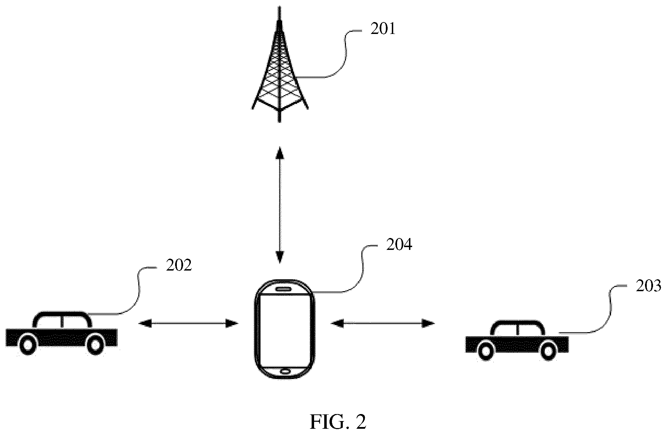

Refer to FIG. 2. The communication system includes a network device 201, a first terminal 202, a second terminal 203, and a relay device 204. This application may be applied to an application scenario of sidelink (sidelink) unicast communication. The relay device 204 is located within coverage of the network device 201 (for example, a gNB or an eNB), and the relay device 204 is in communication connection with the base station. Whether the first terminal 202 and the second terminal 203 are located within the coverage of the base station is not limited. For example, the first terminal 202 and the second terminal 203 may be located within coverage of one base station, or may be located within coverage of different base stations; one is located within the coverage of the base station, and the other one is located outside the coverage of the base station (out-of-coverage); or the two terminals are located outside the coverage of the base station (out-of-coverage). The first terminal 202 may be a transmitting end device, the second terminal 203 may be a receiving end device, a link between the relay device 204 and the second terminal 203 is a first link, and a link between the first terminal 202 and the relay device 204 is a second link. In a relay mode that is based on L2, user plane data is relayed and forwarded below a PDCP layer. The relay device 204 needs to establish a relay RLC bearer corresponding to the first link and a relay RLC bearer corresponding to the second link. The relay device 204 may obtain, from the first terminal 202, some parameters needed for establishing the relay RLC bearer, and obtain, from the network device 201, some parameters needed for establishing the relay RLC bearer. The relay device 204 establishes the relay RLC bearer based on the some parameters obtained from the first terminal 202 and the some parameters obtained from the network device 201, so that the first terminal 202 and the second terminal 203 can transfer data via the relay device 204.

In this application, the network device includes but is not limited to: an evolved NodeB (NodeB, eNB or eNodeB, evolved NodeB) in LTE, a gNodeB (gNodeB or gNB) or a transmission reception point (transmission receiving point/transmission reception point, TRP) in NR, a base station that subsequently evolves in 3GPP. The base station may be a macro base station, a micro base station, a picocell base station, a small cell, a relay station, a balloon station, or the like. A plurality of base stations may support the foregoing networks using a same technology, or may support the foregoing networks using different technologies. The base station may include one or more co-site or non-co-site TRPs. The network device may alternatively be a radio controller, a central unit (centralized unit, CU), and/or a distributed unit (distributed unit, DU) in a cloud radio access network (cloud radio access network, CRAN) scenario. That the network device is a base station is used as an example for description below.

A terminal is a device having a wireless transceiver function. The terminal sometimes may also be referred to as a terminal device, user equipment (user equipment, UE), an access terminal device, a mobile station (mobile station, MS), a mobile terminal (mobile terminal, MT), a UE unit, a UE station, a mobile device, a UE terminal device, a wireless communication device, a machine terminal, a UE agent, a UE apparatus, or the like. In this application, the terminal is especially a device that can perform sidelink communication, for example, a vehicle-mounted terminal, a terminal in self driving (self driving), a terminal in assisted driving, or a handheld terminal or a mobile phone that can perform V2X communication. The terminal in this application may be an in-vehicle module, an onboard component, an automotive chip, or an on board unit that is built in a vehicle as one or more components or units.

A relay device may be a terminal, may be a drive test unit, or may be a wireless relay node (or a relay station). The terminal may be a mobile phone (mobile phone), a tablet computer (Pad), a handheld terminal, a wearable device, a vehicle-mounted terminal, a terminal in self driving (self driving), or a terminal in assisted driving. The terminal sometimes may also be referred to as a terminal device, UE, an access terminal device, an MS, an MT, a UE unit, a UE station, a mobile station, a mobile device, a UE terminal device, a wireless communication device, a machine terminal, a UE agent, a UE apparatus, or the like.

In embodiments of this application, a step performed by a relay device may be performed by the relay device, or a processor, a chip, or a chip system in the relay device, and a step performed by a first terminal may be performed by the first terminal, or a processor, a chip, or a chip system in the first terminal.

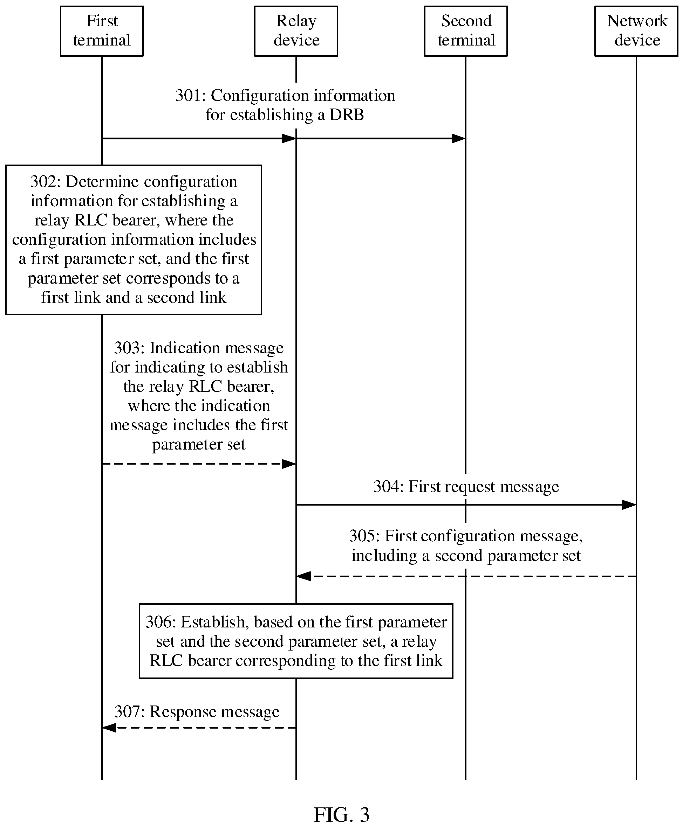

Refer to FIG. 3. Embodiments of this application provides an embodiment of a relay bearer establishing method. In this embodiment, descriptions are provided by using an example in which a first terminal is a transmitting end and a second terminal is a receiving end. In this embodiment, the first terminal determines Tx&Rx common configuration information of a relay RLC bearer that is applicable to both a first link and a second link, and the first terminal sends, to a relay device, QoS information corresponding to the relay RLC bearer. Then, the relay device reports a mapping relationship between the relay RLC bearer and the QoS information to a network device, to request the network device to configure a Tx only parameter corresponding to the relay RLC bearer. The relay device establishes the corresponding relay RLC bearer based on two parts of configuration information: the Tx&Rx common configuration information of the relay RLC bearer and the Tx only parameter corresponding to the relay RLC bearer.

Step 301: The first terminal sends, to the second terminal, configuration information for establishing an SL-DRB (also referred to as a "DRB" in this specification), where the configuration information for establishing the DRB includes an identifier of the DRB, configuration information of a service data adaptation protocol SDAP layer, configuration information of a packet data convergence protocol PDCP layer, and configuration information of an RLC layer. The relay RLC bearer includes a correspondence between a relay RLC entity and the DRB. The relay device receives the configuration information that is for establishing the DRB and that is sent by the first terminal, and forwards, to the second terminal, the configuration information for establishing the DRB, so that the second terminal can establish the DRB based on the configuration information of the DRB.

In this step, the configuration information that is for establishing the DRB and that is determined by the first terminal is used by the second terminal to establish the DRB. The first terminal may notify, by using a radio resource control (radio resource control, RRC) message, the second terminal of the configuration information of the SL-DRB that needs to be established. The message may be a sidelink RRC connection reconfiguration message (RRC Reconfiguration Sidelink). The identifier of the DRB may be an index of the DRB. The configuration information of SDAP may include a mapping relationship from a QoS flow to the DRB. The configuration information of PDCP includes Tx&Rx Common PDCP configuration information (for example, a PDCP SN length and a RoHC configuration). The configuration information of RLC includes a Tx&Rx Common RLC configuration (for example, an RLC mode and an RLC SN length), an LCID, and the like. The message is forwarded to the second terminal via the relay device. Configuration information of a relay RLC bearer for forwarding the message may be predefined in a protocol or preconfigured.

For example, in this step, a purpose of sending, by the first terminal to the second terminal, the configuration information for establishing the DRB is to establish the DRB by the second terminal. This step is not directly associated with step 302. Therefore, a time sequence of step 301 is not limited, and step 301 may be performed at any location after step 302.

Step 302: The first terminal determines the configuration information for establishing the relay RLC bearer, where the configuration information of the relay RLC bearer includes a first parameter set.

Optionally, the configuration information of the relay RLC bearer includes an identifier of the relay RLC bearer.

The first parameter set may include a common RLC configuration parameter (for example, including the RLC mode and the RLC SN length). In this embodiment, the first terminal determines a common RLC configuration parameter corresponding to the first link and a common RLC configuration parameter corresponding to the second link. It may alternatively be understood as that the first terminal determines a (Tx&Rx common) RLC configuration parameter applicable to both the relay device and the second terminal.

In a possible implementation, the first parameter set is one set. The first parameter set includes a configuration parameter and a parameter value corresponding to the configuration parameter, and the configuration parameter and the corresponding parameter value in the first parameter set are applicable to both the first link and the second link. For example, an example in which the configuration parameter is the RLC SN length is used. If the RLC SN length is 12 bits, it indicates that an RLC SN length corresponding to the second link is 12 bits, and an RLC SN length corresponding to the first link is also 12 bits.

In another possible implementation, the first parameter set may include two configuration parameter sets. The first parameter set includes a first configuration parameter set corresponding to the first link and a second configuration parameter set corresponding to the second link. A configuration parameter included in the first configuration parameter set is the same as a configuration parameter included in the second configuration parameter set, and parameter values corresponding to all configuration parameters may be the same, or may be different. For example, the first configuration parameter set and the second configuration parameter set each include the RLC mode and the RLC SN length, an RLC SN length in the first configuration parameter set is 12 bits, and an RLC SN length in the second configuration parameter set is 15 bits. Alternatively, a configuration parameter in the first configuration parameter set and a parameter value of the configuration parameter are the same as a configuration parameter in the second configuration parameter set and a parameter value of the configuration parameter. That is, the first configuration parameter set and the second configuration parameter set are a same configuration parameter set. For example, RLC SN lengths in both of the first configuration parameter set and the second configuration parameter set are 12 bits.

Step 303: The relay device receives an indication message that is for indicating to establish the relay RLC bearer and that is sent by the first terminal, where the indication message includes configuration information of each to-be-transmitted relay RLC bearer, and the configuration information of the relay RLC bearer includes the first parameter set.

For understanding of the first parameter set, refer to the descriptions in step 302. Details are not described herein.

There is at least one relay RLC bearer. A specific quantity is not limited, and is determined based on to-be-transmitted service data.

Optionally, the configuration information of the relay RLC bearer may include the identifier of the relay RLC bearer.

Optionally, the configuration information of the relay RLC bearer may further include a first QoS information set corresponding to the relay RLC bearer. In a possible implementation, the first QoS information set may be one set. In this implementation, the first QoS information set may be a corresponding QoS information set mapped by the first terminal to the relay RLC bearer for data transmission. The first QoS information set corresponds to the second link and the first link. For example, a delay parameter in the first QoS information set is used as an example. If a delay is 10 ms, it indicates that a delay of transmitting, to the second terminal through the second link and the first link, data sent by the first terminal is 10 ms. In another possible implementation, the first QoS information set may include two information sets, namely, a first information set and a second information set. The first information set corresponds to the first link. To be specific, the first information set is a QoS information set that corresponds when the relay device transmits data through the first link. The second information set corresponds to the second link. The second information set is a QoS information set that corresponds when the first terminal transmits data through the second link. A delay parameter in the QoS information set is used as an example. A delay in the first information set is 5 ms, and a delay in the second information set is 5 ms.

Optionally, the configuration information of the relay RLC bearer may further include an LCID corresponding to the relay RLC bearer.

Optionally, the indication message may further include at least one of the following information:
(1) an identifier of the second terminal, where the identifier of the second terminal is used by the relay device to identify that the corresponding relay RLC bearer needs to be established for data transmission between the first terminal and the second terminal; and
(2) an indication field (for example, relay_config indication), where the indication field is for notifying the relay device that the configuration information carried in the indication message is information for establishing the relay RLC bearer.

After receiving the indication message sent by the first terminal, the relay device determines, based on the indication message, the configuration information carried in the indication message, or the indication field carried in the indication message, that the relay RLC bearer needs to be established.

Step 304: The relay device sends a first request message to the network device, where the first request message requests the network device to configure a corresponding second parameter set (namely, a first transmit only parameter set) for a relay RLC bearer corresponding to the first link. The first request message includes information associated with the relay RLC bearer.

Optionally, the first request message includes an identifier of the relay RLC bearer and/or an identifier of the second terminal. The identifier of the second terminal notifies the network device that the requested second parameter set is the parameter set corresponding to the second link.

Optionally, the information associated with the relay RLC bearer includes a target QoS information set. There is an association relationship between the target QoS information set and the first QoS information set. There is a correspondence between the target QoS information set and the relay RLC bearer.

There may be the following several implementations of the target QoS information set: 1. If the first QoS information set is the set: (1) The target QoS information set may be the first QoS information set. (2) The target QoS information set may be an information set determined based on the first QoS information set. For example, if the delay in the first QoS information set is 10 ms (where the delay from the first terminal to the second terminal is 10 ms), the relay device may determine that a delay of the first link is 5 ms, a delay in the target QoS information set is 5 ms, and the target QoS information set corresponds to QoS information corresponding to the first link. 2. If the first QoS information set includes the two sets (namely, the first information set and the second information set), the target QoS information set may be the first information set (namely, QoS information corresponding to the first link).

For example, there is a correspondence between the target QoS information set and the Tx only parameter corresponding to the relay RLC bearer. The network device may configure, for the relay device based on the target QoS information set, the first transmit only parameter set (a Tx only parameter set) corresponding to the relay RLC bearer.

Optionally, the information associated with the relay RLC bearer may further include an RLC mode (mode).

Optionally, the information associated with the relay RLC bearer may further include an LCID corresponding to the relay RLC bearer.

Optionally, the content in the indication message in step 303 is directly reported to the network device by using the first request message, or the configuration information of the relay RLC bearer may be directly reported to the network device by using the first request message.

Optionally, the first request message includes a transmit only parameter configuration indication field (for example, relay_TxConfig_Request), and the indication field indicates to request the first transmit only parameter set (the Tx only parameter set) corresponding to the relay RLC bearer corresponding to the first link.

The network device receives the first request message sent by the relay device, and determines, based on the first request message, the information carried in the first request message, or the indication field carried in the first request message, that the Tx only parameter corresponding to the relay RLC bearer needs to be configured for the relay device.

It should be noted that step 304 is an optional step, and may not be performed, but step 305 is directly performed. To be specific, the relay device does not need to send a request to the network device, and the relay device may directly receive a first configuration message that is preconfigured by the network device for the relay device and that is for establishing the relay RLC bearer.

Step 305: The relay device receives the first configuration message sent by the network device, where the first configuration message includes the second parameter set corresponding to the relay RLC bearer.

The second parameter set includes the first transmit only parameter set (the Tx only parameter set). The first transmit only parameter set includes but is not limited to T-PollRetransmit for controlling duration of a polling retransmission timer, a parameter pollPDU for controlling triggering of polling, pollByte, a maximum allowed quantity of times of ARQ retransmission in RLC AM mode, and the like.

Optionally, the first configuration message includes an identifier of the relay RLC bearer.

The relay device may associate, based on the identifier of the relay RLC bearer in this step and the identifier of the relay RLC bearer in step 304, the first transmit only parameter set (the Tx only parameter) configured by the network device with the relay RLC bearer corresponding to the first link, where the first transmit only parameter set corresponds to the first link.

Optionally, the first configuration message may further include configuration information of a logical channel (logical channel, LCH). The configuration information of the LCH includes at least one of an LCH priority, a parameter related to control execution of (logical channel prioritization, LCP) (for example, the logical channel priority, a prioritized bit rate (prioritized bit rate, PBR), and bucket size duration (bucket size duration, BSD)), whether to enable a hybrid automatic repeat request (hybrid automatic repeat request, HARQ) feedback, a scheduling request (scheduling request, SR) resource associated with the LCH, and a logical channel group (logical channel group, LCG) to which the LCH belongs.

Step 306: The relay device establishes, based on the first parameter set and the second parameter set, the relay RLC bearer corresponding to the first link.

If the first parameter set is the set, the relay device establishes, based on a receive only parameter corresponding to the first parameter set (the Tx&Rx common RLC configuration parameter), a unidirectional RLC bearer corresponding to the second link, and establishes, based on the first parameter set and the first transmit only parameter set (the Tx only parameter) corresponding to the relay RLC bearer and received from the network device, the relay RLC bearer corresponding to the first link.

If the first parameter set includes the two sets, to be specific, the first parameter set includes the first configuration parameter set and the second configuration parameter set, the relay device establishes, based on the first configuration parameter set received from the first terminal and the second parameter set received from the network device, the relay RLC bearer corresponding to the first link, and establishes, based on the second configuration parameter set, the unidirectional RLC bearer corresponding to the second link, so that the relay device can transfer, to the second terminal, data sent by the first terminal.

Step 307: The relay device feeds back a response message to the first terminal, where the response message notifies the first terminal that the relay RLC bearer has been established.

The response message may include an identifier of the relay RLC bearer, and the identifier is used by the terminal to identify which relay RLC bearers have been established.

Optionally, the unidirectional RLC bearer corresponding to the second link is established in step 306. When A relay RLC bearer corresponding to the second link is a bi-directional RLC bearer for receiving data and sending data, to be specific, the first terminal may send data to the relay device through the second link, or the relay device may send data to the first terminal through the second link, step 30a (not shown in the figure) and step 30b (not shown in the figure) may be further included before step 306.

Step 30a: The relay device sends a second request message to the network device, where the second request message requests a second transmit only parameter set (a Tx only parameter set) corresponding to the relay RLC bearer corresponding to the second link. The second transmit only parameter set corresponds to the second link, and the second request message includes an identifier of the first terminal and information associated with the bi-directional RLC bearer. The identifier of the first terminal notifies the network device that a requested second transmitter side parameter corresponds to the second link. The information associated with the bi-directional RLC bearer includes target QoS information set, and there is a correspondence between the target QoS information set and the relay RLC bearer.

There may be the following several implementations of the target QoS information set: 1. If the first QoS information set is the set: (1) The target QoS information set may be the first QoS information set. (2) The target QoS information set may be an information set determined based on the first QoS information set. 2. If the first QoS information set includes the two sets (namely, the first information set and the second information set), the target QoS information set is the second information set (namely, QoS information corresponding to the second link).

Optionally, the information associated with the bi-directional RLC bearer includes an identifier of the relay RLC bearer.

Optionally, the information associated with the bi-directional RLC bearer may further include an RLC mode and/or an LCID corresponding to the bi-directional relay RLC bearer.

Optionally, the second request message includes a transmit only parameter configuration indication field (for example, relay_TxConfig_Request), and the indication field indicates that the relay device requests, from the network device, the second transmit only parameter set (a Tx only parameter) corresponding to the relay RLC bearer corresponding to the second link.

The network device receives the second request message sent by the relay device, and the network device determines, based on the second request message, the information carried in the second request message, or the indication field carried in the second request message, that Tx only parameters corresponding to these relay RLC bearers need to be configured for the relay device.

The relay device reports the target QoS information set to the network device, and the network device may configure, for the relay device based on the target QoS information set, the second transmit only parameter set corresponding to the second link.

Step 30b: The relay device receives a second configuration message sent by the network device, where the second configuration message includes the second transmit only parameter set corresponding to the relay RLC bearer corresponding to the second link.

Optionally, the second configuration message may further include an identifier of the relay RLC bearer, and the relay device may associate the second transmit only parameter set with the relay RLC bearer based on the identifier of the relay RLC bearer.

Optionally, the second configuration message further includes configuration information of an LCH. The configuration information of the LCH includes an LCH priority, a parameter related to LCP (for example, the logical channel priority, a PBR, and BSD), whether to enable a HARQ feedback, an SR resource associated with the LCH, an LCG to which the LCH belongs, and the like.

The second transmitter side parameter set includes but is not limited to T-PollRetransmit, pollPDU, pollByte, a maximum allowed quantity of times of ARQ retransmission in RLC AM mode, and the like.

When the relay RLC bearer corresponding to the second link is the bi-directional bearer, in step 306, the relay device establishes, based on the first parameter set and the second transmit only parameter set, the relay RLC bearer corresponding to the second link.

If the first parameter set is one set, the relay device establishes, based on the receive only parameter corresponding to the first parameter set (the RLC configuration parameter of Tx&Rx common) and the second transmit only parameter set, the bi-directional relay RLC bearer corresponding to the second link.

If the first parameter set includes the two sets, to be specific, the first parameter set includes the first configuration parameter set and the second configuration parameter set, the relay device establishes, based on the second configuration parameter set and the second transmit only parameter set, the bi-directional RLC bearer corresponding to the second link, so that the relay device can send data to the first terminal over the bi-directional RLC bearer corresponding to the second link.

It should be noted that the foregoing process is described by using an example in which the first terminal sends data to the second terminal via the relay device. Actually, when the second terminal sends data to the first terminal via the relay device, a corresponding relay RLC bearer may also be established. The foregoing steps may also be used, but execution entities of the steps need to be correspondingly adjusted. For example, in step 302, the second terminal determines configuration information for establishing an RLC bearer. In step 303, the second terminal sends an indication message to the relay device. In step 304, the relay device feeds back a response message to the second terminal. In step 301, the second terminal sends, to the first terminal, the configuration information for establishing the DRB.

A time sequence of the foregoing steps may be adjusted based on an actual situation. For example, the time sequence of step 301 is not limited. Step 30a and step 304 may be in one message, for example, the first request message. The first request message includes the identifier of the first terminal and the identifier of the second terminal, and the first request message requests the first transmit only parameter set corresponding to the first link and the second transmit only parameter set corresponding to the second link. Step 30b and step 305 may be in one configuration message. For example, the first configuration message includes the first transmit only parameter set corresponding to the first link and the second transmit only parameter set corresponding to the second link. Step 307 is an optional step, and may not be performed. Step 30a and step 30b are also optional steps, and may not be performed. For example, when the first terminal needs to establish only the unidirectional RLC bearer, step 30a and step 30b may not be performed.

In this embodiment, the relay device receives the indication message sent by the first terminal, where the indication message includes configuration information for establishing the relay radio link control RLC bearer, and the configuration information of the relay RLC bearer includes the identifier of the relay RLC bearer and the first parameter set. The first parameter set is the (Tx&Rx common) configuration parameter applicable to both the transmitting side and the receiving side, the first parameter set corresponds to the first link and the second link, and the Tx&Rx common configuration parameter is the parameter that the relay device and the second terminal need to understood consistently. The relay device receives the first configuration message sent by the network device, where the first configuration message includes the identifier of the relay RLC bearer and the second parameter set corresponding to the relay RLC bearer. The second parameter set includes the first transmit only parameter set corresponding to the first link. The relay device may establish, based on the first parameter set and the second parameter set, the relay RLC bearer corresponding to the first link, so that the relay device can forward the data sent by the first terminal to the second terminal. In this embodiment, the first terminal determines the Tx&Rx common configuration parameter of the relay RLC bearer applicable to both the relay device and the second terminal. Both the configuration parameter of the relay RLC bearer corresponding to the first link and the configuration parameter of the relay RLC bearer corresponding to the second link are determined. The configuration parameters corresponding to the first link and the second link are well adapted to better ensure, over the relay RLC bearer, forwarding of service data.

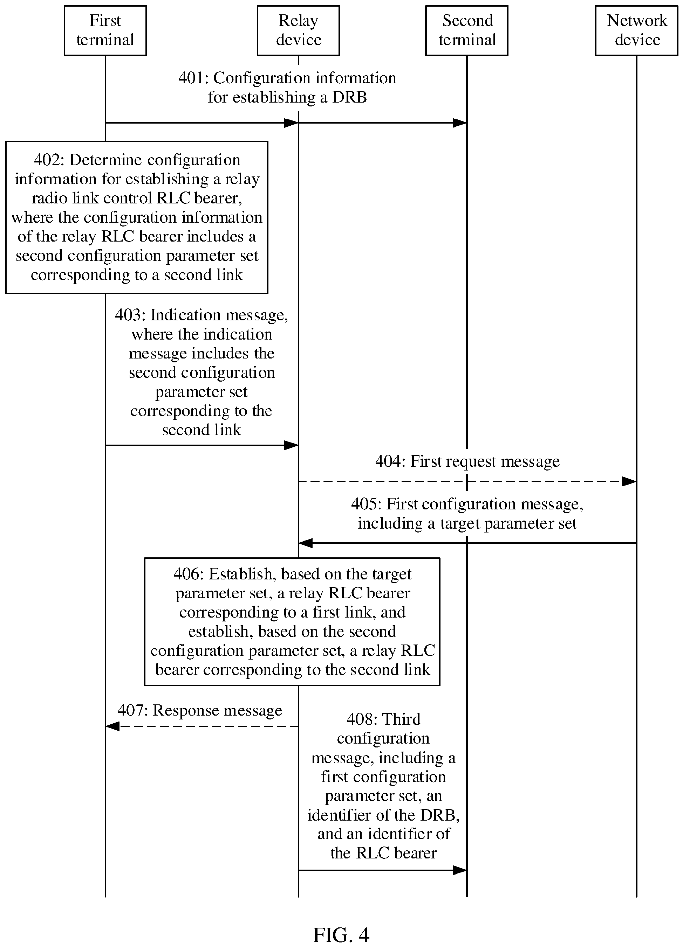

Refer to FIG. 4. Embodiments of this application provide another embodiment of a relay bearer establishing method. Main differences between this embodiment and the embodiment corresponding to FIG. 3 are as follows: (1) In the embodiment corresponding to FIG. 3, the first terminal determines the Tx&Rx common configuration information that is of the relay RLC bearer and that corresponds to the first link and the second link. That is, the first terminal determines the configuration parameter that is of the relay RLC bearer and that the relay device and the second terminal need to understood consistently. However, in this embodiment, a first terminal determines only a Tx&Rx common RLC configuration parameter (which may also be referred to as a second configuration parameter set) corresponding to a second link, and a Tx&Rx common RLC configuration parameter corresponding to a first link is obtained by a relay device from a network device. (2) In the embodiment corresponding to FIG. 3, the configuration information that is for establishing the DRB and that is sent by the first terminal to the second terminal includes the configuration information of the RLC layer. However, in this embodiment, configuration information that is for establishing a DRB and that is sent by the first terminal to a second terminal does not include the configuration information of an RLC layer.

Step 401: The first terminal sends, to the second terminal, the configuration information for establishing the DRB, where the configuration information for establishing the DRB is forwarded by the relay device to the second terminal. To be specific, the relay device receives the configuration information that is for establishing the DRB and that is sent by the first terminal, and forwards the configuration information to the second terminal.

The configuration information for establishing the DRB includes an identifier of the DRB, configuration information of a service data adaptation protocol SDAP layer, and configuration information of a packet data convergence protocol PDCP layer, but does not include the configuration information of the RLC layer and configuration information of an LCH. The identifier of the DRB may be an index number of the DRB.

A configuration of a relay RLC bearer used by the relay device to forward the message may be predefined in a protocol or preconfigured.

A difference between this step and step 301 in the embodiment corresponding to FIG. 3 lies in that: In step 301, the configuration information for establishing the DRB includes the configuration information of the RLC layer. In this step, the configuration information for establishing the DRB does not include the configuration information of the RLC layer.

For understanding of this step, refer to step 301 in the embodiment corresponding to FIG. 3. Details are not described herein.

For example, in this step, a purpose of sending, by the first terminal to the second terminal, the configuration information for establishing the DRB is to establish the DRB by the second terminal. This step is not directly associated with step 402. Therefore, a time sequence of step 401 is not limited, and step 401 may be performed at any location after step 402.

Step 402: The first terminal determines configuration information for establishing a relay radio link control RLC bearer, where the configuration information of the relay RLC bearer includes the second configuration parameter set corresponding to the second link.

A difference between this step and step 302 in the embodiment corresponding to FIG. 3 lies in that: In step 302, the first terminal determines the first parameter set, where the first parameter set corresponds to the first link and the second link. That is, the first terminal determines the Tx&Rx common RLC configuration parameter applicable to both the first link and the second link. In this step, the first terminal determines only the second configuration parameter set. That is, the first terminal determines only the Tx&Rx common RLC configuration parameter corresponding to the second link.

Optionally, the configuration information of the relay RLC bearer may further include an identifier of the relay RLC bearer.

Step 403: The relay device receives an indication message sent by the first terminal, where the indication message includes the configuration information for establishing the relay RLC bearer, and the configuration information of the relay RLC bearer includes the identifier of the relay RLC bearer, an identifier of a DRB associated with the relay RLC bearer, and the second configuration parameter set corresponding to the second link.

A difference between this step and step 303 in the embodiment corresponding to FIG. 3 lies in that: In step 303, the configuration information of the relay RLC bearer does not include an identifier of a data radio bearer DRB associated with the relay RLC bearer. However, in this step, the configuration information of the relay RLC bearer includes the identifier of the DRB associated with the relay RLC bearer.

In step 401, the configuration information that is for establishing the DRB and that is sent by the first terminal to the second terminal does not include the configuration information of the RLC layer. Therefore, a correspondence between the DRB and an RLC entity is not included. Therefore, a function of the identifier of the DRB associated with the relay RLC bearer is as follows: When sending, to the second terminal, configuration information of an RLC bearer corresponding to the DRB, the relay device needs to send the identifier of the DRB to the second terminal, so that the second terminal can associate, based on the identifier of the DRB, the configuration information that is of the RLC bearer and that is indicated by the relay device with the corresponding DRB.

The configuration information of the relay RLC bearer may further include a first QoS information set corresponding to the relay RLC bearer.

Optionally, the configuration information of the relay RLC bearer may further include an LCID corresponding to the relay RLC bearer.

Optionally, the indication message may further include an identifier of the second terminal and/or an indication field.

For understanding of the first QoS information set, the identifier of the relay RLC bearer, the identifier of the second terminal, and the indication field (relay_config_indication) in this step, refer to step 303 in the embodiment corresponding to FIG. 3. Details are not described herein.

Step 404: The relay device sends a first request message to the network device, to request a target parameter set of a relay RLC bearer corresponding to the first link. The first request message includes the identifier of the second terminal and information associated with the relay RLC bearer. The identifier of the second terminal notifies the network device that the target parameter set corresponds to the first link. The information associated with the relay RLC bearer may include a target QoS information set. There is an association relationship between the target QoS information set and the first QoS information set. There is a correspondence between the target QoS information set and the relay RLC bearer. For understanding of the target QoS information set, refer to step 304 in the embodiment corresponding to FIG. 3. Details are not described herein.

The target parameter set includes a first configuration parameter set corresponding to the first link and a first transmit only parameter set (a Tx only parameter) corresponding to the first link.

In this embodiment, the first terminal determines the second configuration parameter set (namely, the Tx&Rx common RLC configuration parameter) corresponding to the second link, and the first configuration parameter set (namely, a Tx&Rx common RLC configuration parameter) corresponding to the first link needs to be obtained from the network device.

Optionally, the first request message may further include an identifier of the relay RLC bearer.

Optionally, the information associated with the relay RLC bearer may further include an RLC mode (mode).

Optionally, the information associated with the relay RLC bearer may further include an LCID corresponding to the relay RLC bearer.

Optionally, the first request message may include a transmit only parameter configuration indication field (for example, relay_TxALLConfig_Request), and the indication field indicates that the relay device requests the first configuration parameter set and the first transmit only parameter set (the Tx only parameter) that are of the relay RLC bearer corresponding to the first link. The network device receives the first request message sent by the relay device, and determines, based on the first request message, the information carried in the first request message, or the indication field carried in the first request message, that the first configuration parameter set and the first transmit only parameter set that correspond to the relay RLC bearer need to be configured for the relay device.

A difference between this step and step 304 in the embodiment corresponding to FIG. 3 lies in that: In step 304, the first request message requests to configure the corresponding first transmit only parameter set for the relay RLC bearer corresponding to the first link. However, in this embodiment, the first request message requests the first configuration parameter set and the first transmit only parameter set that correspond to the first link.

Step 405: The relay device receives a first configuration message sent by the network device, where the first configuration message includes the target parameter set of the relay RLC bearer corresponding to the first link.

The target parameter set includes the first configuration parameter set and the first transmit only parameter set that correspond to the first link.

Optionally, the first configuration message includes an identifier of the relay RLC bearer. The relay device associates, based on the identifier of the relay RLC bearer in this step and the identifier of the relay RLC bearer in step 404, the first configuration parameter set and the first transmit only parameter set that are configured by the network device with the relay RLC bearer corresponding to the first link.

Optionally, the first configuration message may further include an identifier of the second terminal. In this case, the relay device may determine, based on the identifier of the second terminal and the identifier of the relay RLC bearer, that the target parameter set configured by the network device is the relay RLC bearer corresponding to the first link.

Optionally, the first configuration message may further include configuration information of the LCH. For understanding of the configuration information of the LCH, refer to step 305 in the embodiment corresponding to FIG. 3. Details are not described herein.

For understanding of the first transmit only parameter set in this step, refer to step 305 in the embodiment corresponding to FIG. 3. Details are not described herein.

Step 406: Establish, based on the target parameter set, the relay RLC bearer corresponding to the first link.

The relay device establishes, based on the target parameter set received from the network device, a unidirectional RLC bearer corresponding to the first link, and establishes, based on the second configuration parameter set received from the first terminal, a unidirectional RLC bearer corresponding to the second link, so that the relay device can transfer, to the second terminal, data sent by the first terminal.

Step 407: The relay device feeds back a response message to the first terminal, where the response message notifies the first terminal that the relay RLC bearer has been established.

Optionally, the response message includes an identifier of the relay RLC bearer and/or an identifier of the DRB. The identifier of the relay RLC bearer and/or the identifier of the DRB notify/notifies the first terminal which relay RLC bearers have been established.

Step 408: The relay device sends a third configuration message to the second terminal, where the third configuration message includes the first configuration parameter set, an identifier of the DRB, and an identifier of the RLC bearer.

Optionally, configuration information of the RLC bearer corresponding to the DRB may further include an LCID.

A purpose of sending, by the relay device to the second terminal, the configuration information of the RLC bearer corresponding to the DRB is to indicate the second terminal to establish the DRB. The second terminal associates, with the corresponding DRB based on the identifier of the DRB (for example, may be the index number of the DRB), the configuration information that is of the RLC bearer and that is indicated by the relay device. The second terminal may establish the corresponding DRB based on the configuration information of SDAP and the configuration information of PDCP that are indicated by the first terminal, and the configuration information that is of the RLC bearer and that is indicated by the relay device.

It may be understood that, in the embodiment corresponding to FIG. 4, that a relay RLC bearer is a unidirectional RLC bearer is used as an example. If the relay RLC bearer corresponding to the second link is a bi-directional RLC bearer for receiving data and sending data, to be specific, the first terminal may send data to the relay device through the second link, and the relay device may also feed back data to the first terminal through the second link, the following optional step 40a (not shown in the figure) and step 40b (not shown in the figure) may be further included before step 406.

Step 40a: The relay device sends a second request message to the network device, where the second request message requests a second transmit only parameter set corresponding to the bi-directional RLC bearer corresponding to the second link, the second request message may include an identifier of the first terminal, an identifier of the relay RLC bearer, and target QoS information set, and there is a correspondence between the target QoS information set and the relay RLC bearer.

For understanding of this step, refer to step 30a in the embodiment corresponding to FIG. 3. Details are not described herein.

Step 40b: The relay device receives a second configuration message sent by the network device, where the second configuration message includes the second transmit only parameter set corresponding to the bi-directional RLC bearer corresponding to the second link.

For understanding of this step, refer to step 30b in the embodiment corresponding to FIG. 3. Details are not described herein.

In step 406, the relay device establishes, based on the second configuration parameter set received from the first terminal and the second transmit only parameter set, a bi-directional relay RLC bearer corresponding to the first link, so that the relay device can feed back data to the first terminal through the second link.

It should be noted that the foregoing process is described by using an example in which the first terminal sends data to the second terminal via the relay device. Actually, when the second terminal sends data to the first terminal via the relay device, a corresponding relay RLC bearer may also be established. The foregoing steps may also be used, but execution entities of the steps need to be correspondingly adjusted. For example, in step 402, the second terminal determines configuration information for establishing an RLC bearer. In step 403, the second terminal sends an indication message to the relay device. In step 404, the relay device feeds back a response message to the second terminal. In step 401, the second terminal sends, to the first terminal, the configuration information for establishing the DRB.

A time sequence of the foregoing steps may be adjusted based on an actual situation. For example, a time sequence of step 401 is not limited. Step 40a and step 404 may be in one request. Step 40b and step 405 may be in one configuration message. Step 407 is an optional step, and may not be performed. Step 408 may be performed at any location after step 405. Step 40a and step 40b are also optional steps, and may not be performed. For example, when the first terminal needs to establish only a unidirectional RLC bearer, step 40a and step 40b may not be performed.

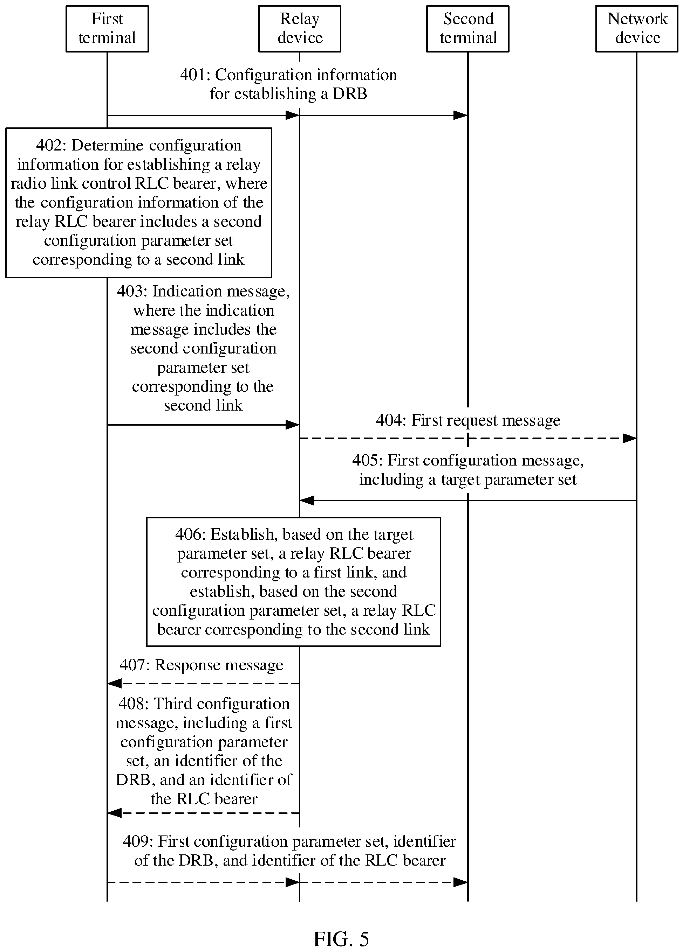

In an optional implementation, refer to FIG. 5. Step 408 may alternatively be: The relay device sends, to the first terminal, the configuration message (including the first configuration parameter set, the identifier of the DRB, and the identifier of the RLC bearer) of the RLC bearer corresponding to the DRB. Step 409: The first terminal further sends the configuration information to the second terminal. Optionally, step 409 and step 401 may be one message. To be specific, the first terminal performs step 401 only after receiving the configuration information that is of the RLC bearer corresponding to the DRB and that is sent by the relay device, and notifies, by using a message (for example, an RRC reconfiguration sidelink message), the second terminal of a configuration message of the DRB that needs to be established. The configuration message of the DRB includes the configuration information that is for establishing the DRB and that is carried in step 401 and the configuration information that is of the RLC bearer corresponding to the DRB and that is carried in step 408.

In this embodiment, the first terminal determines only the Tx&Rx common RLC configuration parameter (the second configuration parameter set) corresponding to the second link. The relay device receives the second configuration parameter set from the first terminal. The relay device obtains the target parameter set from the network device. The target parameter set includes the Tx&Rx common RLC configuration parameter and the first transmit only parameter set that correspond to the first link. Because the network device (for example, a base station) connected to the relay device needs to allocate a resource for transmission between the relay device and the second terminal, it is appropriate for the network device to determine the common RLC configuration parameter corresponding to the first link. This can avoid additional complexity caused by determining the common RLC configuration parameter by the first terminal to base station scheduling. The relay device establishes the relay RLC bearer of the second link based on the second configuration parameter set received from the first terminal, and the relay device establishes, based on the target parameter set, the relay RLC bearer corresponding to the first link, so that the relay device can forward, by using the relay RLC bearer, data sent by the first terminal to the second terminal.

For example, in embodiments of this application, in step 303 and step 301 in the embodiment corresponding to FIG. 3 and step 403 and step 401 in the embodiment corresponding to FIG. 4, the first terminal interacts with the relay device by using a PC5-RRC message. Therefore, when receiving messages sent by the first terminal, the relay device needs to distinguish which messages need to be directly forwarded to the second terminal and which messages need to be delivered to an RRC layer of the relay device for parsing and processing. In an implementation, LCIDs used for the two types of PC5-RRC messages are different. For example, a first LCID (for example, A, B, and C) and the like are used for a PC5-RRC message (the PC5-RRC message that needs to be forwarded by the relay device) exchanged between the first terminal and the second terminal. A second LCID (for example, A', B', or C') and the like are used for a PC5-RRC message (the PC5-RRC message that needs to be delivered to the RRC layer of the relay device for parsing and processing) directly exchanged between the first terminal and the relay device. The first LCID (for example, A, B, and C) and the second LCID (for example, A', B', and C') may be predefined in a protocol or preconfigured. The relay device may determine a corresponding PC5-RRC processing manner by identifying the first LCID and the second LCID.

For example, in embodiments of this application, for a same relay RLC bearer, the identifier of the relay RLC bearer carried in the indication message received by the relay device and the identifier of the relay RLC bearer reported by the relay device to the network device indicate the same relay RLC bearer, but representation manners may be different. For example, the identifier of the relay RLC bearer is an index number. For example, in step 303 (or step 403) and step 304 (or step 404), for a relay RLC bearer corresponding to an SL-DRB, an index number of the relay RLC bearer carried in the indication message in step 304 (or step 404) may be different from an index number of the RLC bearer carried in the request in step 304 (or step 404). For example, for the relay RLC bearer corresponding to the SL-DRB, the index number of the RLC bearer carried in the indication message in step 303 (or step 403) is "1", and the index number of the RLC bearer reported by the relay device to the network device in the request message in step 304 (or step 404) is "2". The relay device only needs to determine a correspondence between the index number of the relay RLC bearer indicated by the first terminal and the index number of the RLC bearer reported to the network device.

It should be noted that, in embodiments of this application, a sequence of the steps may be adjusted for implementation. This is not limited in this application. It should be understood that performing some steps in the figure or adjusting a sequence of the steps for specific implementation shall fall within the protection scope of this application.

Corresponding to the methods provided in the foregoing method embodiments, embodiments of this application further provide corresponding apparatuses. The apparatuses include corresponding modules configured to perform the foregoing embodiments. The module may be software, hardware, or a combination of the software and the hardware.

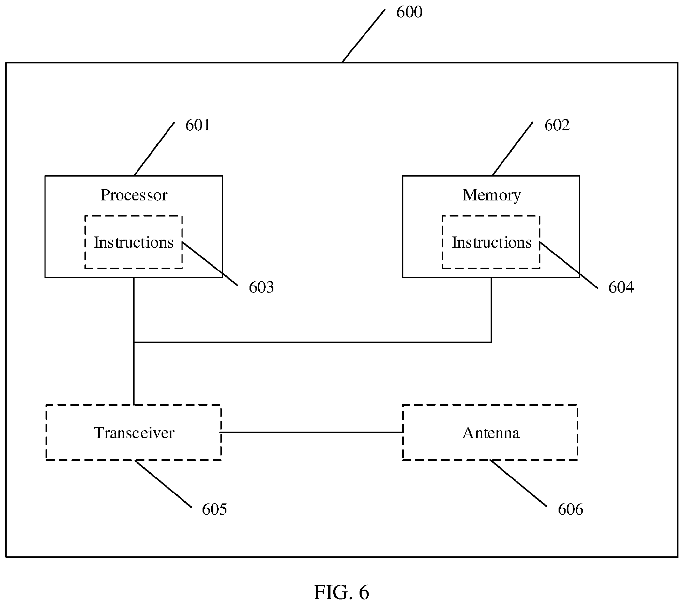

Refer to FIG. 6. An embodiment of this application provides a communication apparatus 600. In a possible design, the apparatus may be a relay device, or may be a chip, a chip system, a processor, or the like that supports the relay device in implementing the foregoing methods. The apparatus may be configured to implement the methods performed by the relay device in the foregoing method embodiments. For details, refer to the descriptions in the foregoing method embodiments. In a possible design, the apparatus may be a terminal, or may be a chip, a chip system, a processor, or the like that supports the terminal in implementing the foregoing methods. The apparatus may be configured to implement the methods performed by the first terminal in the foregoing method embodiments. For details, refer to the descriptions in the foregoing method embodiments.

The apparatus 600 may include one or more processors 601. The processor 601 may also be referred to as a processing unit, and may implement a control function. The processor 601 may be a general-purpose processor, a dedicated processor, or the like. For example, the processor 601 may be a baseband processor or a central processing unit. The baseband processor may be configured to process a communication protocol and communication data. The central processing unit may be configured to control the communication apparatus (for example, a base station, a baseband chip, a terminal, a terminal chip, a DU, or a CU), execute a software program, and process data of the software program.

In an optional design, the processor 601 may alternatively store instructions and/or data 603, and the instructions and/or data 603 may be run by the processor, to enable the apparatus 600 to perform the methods in the foregoing method embodiments.

In another optional design, the processor 601 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data, or the transceiver circuit, the interface, or the interface circuit may be configured to transmit or transfer a signal.

In still another possible design, the apparatus 600 may include a circuit, and the circuit may implement the sending, receiving, or communication function in the foregoing method embodiments.

Optionally, the apparatus 600 may include one or more memories 602. The memory may store instructions 604. The instructions may be run on the processor, so that the apparatus 600 performs the methods in the foregoing method embodiments. Optionally, the memory may further store data. Optionally, the processor may also store instructions and/or data. The processor and the memory may be separately disposed, or may be integrated together.

Optionally, the apparatus 600 may further include a transceiver 605 and/or an antenna 606. The processor 601 may be referred to as a processing unit, and control the apparatus 600. The transceiver 605 may be referred to as a transceiver unit, a transceiver, a transceiver circuit, a transceiver apparatus, a transceiver module, or the like, and is configured to implement a transceiver function.

Optionally, the apparatus 600 in this embodiment of this application may be configured to perform the methods performed by the relay device in FIG. 3 to FIG. 5 in the embodiments of this application. Alternatively, the apparatus 600 in this embodiment of this application may be configured to perform the methods performed by the first terminal in FIG. 3 to FIG. 5 in the embodiments of this application.

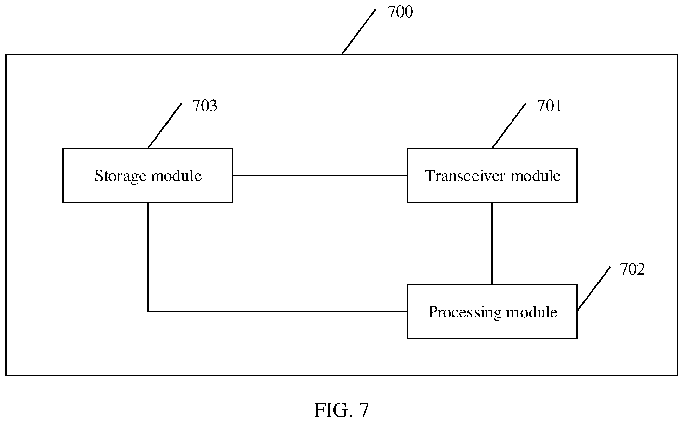

As shown in FIG. 7, another embodiment of this application provides a communication apparatus 700. The apparatus 700 may include a processing module 702 (or referred to as a processing unit). Optionally, the apparatus 700 may further include a transceiver module 701 (or referred to as a transceiver unit) and a storage module 703 (or referred to as a storage unit).

In a possible design, one or more modules in FIG. 7 may be implemented by one or more processors, may be implemented by one or more processors and one or more memories, may be implemented by one or more processors and one or more transceivers, or may be implemented by one or more processors, one or more memories, and one or more transceivers. This is not limited in this embodiment of this application. The processor, the memory, and the transceiver may be separately disposed, or may be integrated.

The apparatus has a function of implementing the relay device in embodiments of this application. For example, the apparatus includes a corresponding module, unit, or means (means) used by the relay device to perform the steps related to the relay device in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments. Alternatively, the apparatus has a function of implementing the first terminal in embodiments of this application. For example, the apparatus includes a corresponding module, unit, or means (means) used by the first terminal to perform the steps related to the terminal in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments.

In an optional implementation, the modules in the communication apparatus 700 in this embodiment of this application may be configured to perform the methods performed by the relay device in FIG. 3 to FIG. 5 in the embodiments of this application.

In a possible design, the apparatus 700 may include the processing module 702 and the transceiver module 701.

The transceiver module 701 is configured to receive an indication message sent by a first terminal, where the indication message includes configuration information for establishing a relay radio link control RLC bearer, and the configuration information of the relay RLC bearer includes a first parameter set.

The transceiver module 701 is further configured to receive a first configuration message sent by a network device, where the first configuration message includes a second parameter set corresponding to the relay RLC bearer.

The processing module 702 is configured to establish, based on the first parameter set and the second parameter set, a relay RLC bearer corresponding to a first link, where the first link is a link between a relay device and a second terminal, and the first link is for data transmission between the first terminal and the second terminal.

Further, the transceiver module 701 is configured to perform step 303, step 304, step 305, step 307, step 30a, and step 30b that correspond to FIG. 3. For details, refer to the descriptions in step 303, step 304, step 305, step 307, step 30a, and step 30b in the method embodiment corresponding to FIG. 3. Details are not described herein. The processing module 702 is configured to perform step 306 corresponding to FIG. 3. For details, refer to step 306 in the method embodiment corresponding to FIG. 3. Details are not described herein.

In a possible design,
the transceiver module 701 is configured to receive a first configuration message sent by a network device, where the first configuration message includes a target parameter set of a relay RLC bearer corresponding to a first link; and
the processing module 702 is configured to establish, based on the target parameter set, the relay RLC bearer corresponding to the first link, where the first link is a link between a relay device and a second terminal, and the first link is for data transmission between a first terminal and the second terminal.

Further, the transceiver module 701 is configured to perform step 403, step 404, step 405, step 407, step 408, step 40a, step 40b, and step 409 that correspond to FIG. 4 and FIG. 5. For details, refer to the descriptions in step 403, step 404, step 405, step 407, step 408, step 40a, step 40b, and step 409 in the method embodiments corresponding to FIG. 4 and FIG. 5. Details are not described herein. The processing module 702 is configured to perform step 406 corresponding to FIG. 4 and FIG. 5. For details, refer to step 406 in the method embodiments corresponding to FIG. 4 and FIG. 5. Details are not described herein.

In an optional implementation, the modules in the apparatus 700 in this embodiment of this application may be configured to perform the methods performed by the first terminal in FIG. 3 to FIG. 5 in the embodiments of this application.

In a possible design, the communication apparatus 700 may include the processing module 702 and the transceiver module 701.

The processing module 702 is configured to determine configuration information for establishing a relay RLC bearer, where the configuration information of the relay RLC bearer includes a first parameter set.

The transceiver module 701 is configured to send, to a relay device, the configuration information for establishing the relay RLC bearer.

Further, the processing module 702 is configured to perform step 302 in the method embodiment corresponding to FIG. 3 and step 402 in the method embodiments corresponding to FIG. 4 and FIG. 5. For details, refer to the descriptions in the foregoing method embodiments. Details are not described herein. The transceiver module 701 is configured to perform step 301 and step 303 in FIG. 3 and steps 401 and 403 in the method embodiments corresponding to FIG. 4 and FIG. 5. For details, refer to the descriptions in the foregoing method embodiments. Details are not described herein.

This application further provides a computer-readable medium. The computer-readable medium stores a computer program. When the computer program is executed by a computer, the function in any one of the foregoing method embodiments is implemented.

This application further provides a computer program product. When the computer program product is executed by a computer, the function in any one of the foregoing method embodiments is implemented.

In this application, an element represented in a singular form is intended to represent "one or more", but does not represent "only one", unless otherwise specified. In this application, unless otherwise specified, "at least one" is intended to represent "one or more", and "a plurality of is intended to represent "two or more".

It may be understood that, in embodiments of this application, "when" and "if' both mean that the apparatus performs corresponding processing in an objective situation, are not intended to limit time, do not require the apparatus to necessarily have a determining action during implementation, and do not mean other limitation.

It may be understood that, in embodiments of this application, "B corresponding to A" indicates that B is associated with A, and B may be determined based on A. However, it should be further understood that determining B based on A does not mean that B is determined based only on A. That is, B may alternatively be determined based on A and/or other information.

For example, in embodiments of this application, the "parameter set" may be understood as a group of parameters, or may be understood as one or more parameters.

In another possible design, when the apparatus is a chip in a terminal, the chip includes a processing unit and a communication unit. The processing unit may be, for example, a processor. The communication unit may be, for example, an input/output interface, a pin, or a circuit. The processing unit may execute computer-executable instructions stored in a storage unit, so that the chip in the terminal performs the wireless communication method in any implementation of the first aspect. Optionally, the storage unit is a storage unit in the chip, for example, a register or a buffer, or the storage unit may be a storage unit in the terminal but outside the chip, for example, a read-only memory (read-only memory, ROM), another type of static storage device capable of storing static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits for controlling program execution of the wireless communication method according to the first aspect.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application.

## Claims

1. A relay bearer establishing method, comprising:
receiving an indication message sent by a first terminal, wherein the indication message comprises a first parameter set for establishing a relay radio link control RLC bearer;
receiving a first configuration message sent by a network device, wherein the first configuration message comprises a second parameter set corresponding to the relay RLC bearer; and
establishing, based on the first parameter set and the second parameter set, a relay RLC bearer corresponding to a first link, wherein the first link is a link between a relay device and a second terminal, and the first link is for data transmission between the first terminal and the second terminal.

2. The method according to claim 1, wherein the indication message further comprises a first quality of service QoS information set; and before the receiving a first configuration message sent by a network device, the method further comprises:
sending a first request message to the network device, to request the first configuration message of the relay RLC bearer, wherein the first request message comprises a target QoS information set, there is an association relationship between the target QoS information set and the first QoS information set, and there is a correspondence between the target QoS information set and the relay RLC bearer corresponding to the first link.

3. The method according to claim 1, wherein the first parameter set comprises a first configuration parameter set corresponding to the first link and a second configuration parameter set corresponding to a second link, and the second link is a link between the first terminal and the relay device; and
the establishing, based on the first parameter set and the second parameter set, a relay RLC bearer corresponding to a first link comprises:
establishing, based on the first configuration parameter set and the second parameter set, the relay RLC bearer corresponding to the first link, and establishing, based on the second configuration parameter set, a relay RLC bearer corresponding to the second link.

4. The method according to claim 3, wherein the first configuration parameter set and the second configuration parameter set are a same configuration parameter set.

5. The method according to claim 1, wherein the method further comprises:
receiving a configuration message that is for establishing a data radio bearer DRB and that is sent by the first terminal, wherein the configuration message for establishing the DRB comprises an identifier of the DRB, configuration information of a service data adaptation protocol SDAP layer, configuration information of a packet data convergence protocol PDCP layer, and configuration information of an RLC layer, and the relay RLC bearer comprises a correspondence between a relay RLC entity and the DRB; and
forwarding, to the second terminal, the configuration message for establishing the data radio bearer DRB.

6. The method according to claim 1, wherein the method further comprises:
receiving a second configuration message sent by the network device, wherein the second configuration message comprises a second transmit only parameter set corresponding to a relay RLC bearer corresponding to a second link, and the second link is a link between the first terminal and the relay device; and
the method further comprises:
establishing, based on the first parameter set and the second transmit only parameter set, the relay RLC bearer corresponding to the second link, wherein the relay RLC bearer is a bi-directional RLC bearer.

7. The method according to claim 6, wherein before the receiving a second configuration message sent by the network device, the method further comprises:
sending a second request message to the network device, to request the second transmit only parameter set corresponding to the relay RLC bearer corresponding to the second link, wherein the second request message comprises a target QoS information set, and there is a correspondence between the target QoS information set and the relay RLC bearer corresponding to the second link.

8. The method according to claim 2, wherein the first QoS information set is a QoS information set that corresponds when the first terminal transmits data to the second terminal; and the target QoS information set is the first QoS information set; or the target QoS information set is an information set determined by the relay device based on the first QoS information set.

9. The method according to claim 2, wherein the first QoS information set comprises a first information set and a second information set, the first information set is a QoS information set that corresponds when the relay device transmits data through the first link, and the second information set is a QoS information set that corresponds when the first terminal transmits data through a second link; and the target QoS information set is an information set determined by the relay device based on the second information set; or the target QoS information set is the first information set.

10. A relay bearer establishing method, comprising:
receiving a first configuration message sent by a network device, wherein the first configuration message comprises a target parameter set of a relay RLC bearer corresponding to a first link; and
establishing, based on the target parameter set, the relay RLC bearer corresponding to the first link, wherein the first link is a link between a relay device and a second terminal, and the first link is for data transmission between a first terminal and the second terminal.

11. The method according to claim 10, wherein the target parameter set comprises a first configuration parameter set corresponding to the first link and a first transmit only parameter set corresponding to the first link.

12. The method according to claim 10, wherein the method further comprises:
receiving an indication message sent by the first terminal, wherein the indication message comprises configuration information for establishing the relay RLC bearer, the configuration information of the relay RLC bearer comprises an identifier of the relay RLC bearer, an identifier of a data radio bearer DRB associated with the relay RLC bearer, and a second configuration parameter set, the relay RLC bearer comprises a correspondence between a relay RLC entity and the DRB, the second configuration parameter set is a configuration parameter corresponding to a second link, and the second link is a link between the first terminal and the relay device; and
establishing, based on the second configuration parameter set, a relay RLC bearer corresponding to the second link.

13. The method according to claim 12, wherein the indication message comprises a first quality of service QoS information set; and before the receiving a first configuration message sent by a network device, the method further comprises:
sending a first request message to the network device, to request the target parameter set of the relay RLC bearer, wherein the first request message comprises a target QoS information set, there is an association relationship between the target QoS information set and the first QoS information set, and there is a correspondence between the target QoS information set and the relay RLC bearer corresponding to the first link.

14. The method according to claim 12, wherein the method further comprises:
receiving a second configuration message sent by the network device, wherein the second configuration message comprises a second transmit only parameter set corresponding to the relay RLC bearer corresponding to the second link, and the relay RLC bearer is a bi-directional RLC bearer; and
establishing, based on the second transmit only parameter set and the second configuration parameter set, the relay RLC bearer corresponding to the second link.

15. The method according to claim 14, wherein the method further comprises:
sending a second request message to the network device, to request the second transmit only parameter set corresponding to the bi-directional RLC bearer corresponding to the second link, wherein the second request message comprises a target QoS information set, and there is a correspondence between the target QoS information set and the relay RLC bearer corresponding to the second link.

16. The method according to claim 12, wherein the method further comprises:
sending, to the second terminal, a configuration message of an RLC bearer corresponding to the DRB, wherein the configuration message of the RLC bearer comprises a first configuration parameter set, the identifier of the DRB, and an identifier of the RLC bearer.

17. The method according to any one of claims 11 to 16, wherein the method further comprises:
receiving a configuration message that is for establishing the DRB and that is sent by the first terminal, wherein the configuration message for establishing the DRB comprises the identifier of the DRB, configuration information of a service data adaptation protocol SDAP layer, and configuration information of a packet data convergence protocol PDCP layer; and
forwarding, to the second terminal, the configuration message for establishing the data radio bearer DRB.

18. The method according to claim 12, wherein the method further comprises:
sending a first configuration parameter set to the first terminal, wherein the first configuration parameter set is sent by the first terminal to the second terminal.

19. A relay bearer establishing method, comprising:
determining configuration information for establishing a relay radio link control RLC bearer, wherein the configuration information of the relay RLC bearer comprises an identifier of the relay RLC bearer and a first parameter set; and
sending the configuration information of the relay RLC bearer to a relay device.

20. The method according to claim 19, wherein the first parameter set comprises a first configuration parameter set corresponding to a first link and a second configuration parameter set corresponding to a second link, the first link is a link between the relay device and a second terminal, and the second link is a link between a first terminal and the relay device.

21. The method according to claim 20, wherein the first configuration parameter set and the second configuration parameter set are a same configuration parameter set.

22. The method according to claim 19, wherein the first parameter set corresponds to a second link, and the second link is a link between a first terminal and the relay device.

23. The method according to any one of claims 19 to 22, wherein the configuration information further comprises a first QoS information set, and the first QoS information set is a QoS information set that corresponds when the first terminal transmits data to the second terminal.

24. The method according to claim 23, wherein the first QoS information set comprises a first information set and a second information set, the first information set is a QoS information set that corresponds when the relay device transmits data through the first link, and the second information set is a QoS information set that corresponds when the first terminal transmits data through the second link.

25. A communication apparatus, comprising a processor, wherein the processor is coupled to at least one memory, and the processor is configured to read a computer program stored in the at least one memory, so that the apparatus performs the method according to any one of claims 1 to 9, the method according to any one of claims 10 to 18, or the method according to any one of claims 19 to 24.

26. A computer-readable medium, wherein the computer-readable storage medium is configured to store a computer program; and when the computer program is run on a computer, the computer is enabled to perform the method according to any one of claims 1 to 9, the method according to any one of claims 10 to 18, or the method according to any one of claims 19 to 24.

27. A chip, comprising a processor and a communication interface, wherein the processor is configured to read instructions to perform the method according to any one of claims 1 to 9, the method according to any one of claims 10 to 18, or the method according to any one of claims 19 to 24.
